# EUROPEAN PATENT SPECIFICATION

(11) **EP 4 320 496 B1**
(45) Date of publication and mention of the grant of the patent: **21.08.2024**
(21) Application number: 22835028.6
(22) Date of filing: 13.12.2022
(51) Int. Cl.: G05D 16/06

(54) **PRESSURE REDUCER**
DRUCKMINDERER
RÉDUCTEUR DE PRESSION

(30) Priority: 01.06.2022 EP 22176759
(43) Date of publication of application: 14.02.2024
(73) Proprietor: Husqvarna AB, 561 82 Huskvarna (SE)
(72) Inventor: RENNER, Thomas, 89079 Ulm (DE)
(74) Representative: Finkele, Rolf
(86) International application number: PCT/EP2022/085644
(87) International publication number: WO 2023/232277

(56) References cited:
- EP-A1- 3 226 097
- US-A- 5 257 646
- US-A- 5 396 918
- US-A- 5 921 275

## Description

### TECHNICAL FIELD

The present disclosure relates to a pressure reducer. More specifically, the present disclosure relates to an improved design of the pressure reducer, which allows efficient working of the pressure reducer.

### BACKGROUND

Pressure reducers are found in many common domestic and industrial applications. For example, pressure reducers are used in gas grills to regulate propane, in home heating furnaces to regulate natural gases, in medical and dental equipment to regulate oxygen and anesthesia gases, in pneumatic automation systems to regulate compressed air, in engines to regulate fuel and in gardening systems to regulate irrigation among other applications. As this partial list demonstrates there are numerous applications for pressure reducers yet, in each of them, the pressure reducers provide the same function. The pressure reducers reduce a supply (or inlet) pressure to a lower outlet pressure and work to maintain this outlet pressure despite fluctuations in the inlet pressure. The reduction of the inlet pressure to the lower outlet pressure is the key characteristic of the pressure reducers.

The pressure reducer includes a spring-operated hollow piston rod, a diaphragm operatively coupled with the piston rod, a valve, and a sealing element disposed between the piston rod and the valve in a pressure reducer chamber along an axial direction of the pressure reducer. The valve opens and closes due to the rocking motion of the piston rod in the axial direction in the pressure reducer chamber. The valve closes when the piston rod contacts a planar sealing surface of the sealing element. However, during contact between the piston rod and the sealing element with such an arrangement of the pressure reducer, vibrations or pulsations often occur and potentially result in an unwanted noise, leakage and drop in overall efficiency of the pressure reducer.

A pressure reducer is provided in United States patent 10,906,052 (hereinafter referred to as '052 reference). The '052 reference provides a pressure regulator that includes a housing having an inlet cap with an inlet flow passage and an outlet cap with an outlet flow passage. A plunger is reciprocally mounted in the housing. A stationary regulator valve seat is disposed between the inlet flow passage and an inlet to the plunger. The plunger is sealed when moved to contact with the regulator valve seat to momentarily block the inlet flow. However, there is still a need for a simple and improved pressure reducer design that may improve the overall efficiency of the pressure reducer and substantially reduce or eliminate the drawbacks such as vibrations, among others, as discussed above.

A further pressure regulator is disclosed in US patent US 5,257,646 A (hereinafter referred to as '646 reference). The '646 reference discloses a flow regulator of the flow-through type, with an inlet provided at one end of an upstream section, and an outlet provided at a distal end of a downstream section. Within the upstream section of the regulator housing a replaceable, plastic regulator seat having a conical center portion and an annular seat surface, is mounted. A regulator plunger slides or reciprocates within a housing of the flow regulator. One end of the plunger is formed with a tapered edge to insure precise contact with the seat surface. The plunger is slidable within the flow regulator from a first open position to a second closed position where the lower edge of the plunger is seated on the seat surface. Further, the flow regulator comprises a flexible diaphragm. At all times, the upstream end of the chamber is sealed by the diaphragm. In the first open position, fluid flows through the regulator from the inlet section towards the outlet section around the seat and through the plunger and the outlet section. Therefore, the '646 reference unambiguously discloses an axial sealing of the lower edge of the plunger with the seat surface of the regulator seat. However, there is still a need for a simple and improved pressure reducer design that may improve the overall efficiency of the pressure reducer and substantially reduce or eliminate the drawbacks such as vibrations, among others, as discussed above.

### SUMMARY

In view of the above, it is an objective of the present invention to solve or at least reduce the drawbacks discussed above. The objective is at least partially achieved by a pressure reducer for reducing a fluid pressure. The pressure reducer includes a pressure reducer body defining at least one pressure reducer chamber along a central axis. The pressure reducer chamber includes an inlet section and an outlet section fluidly coupled with the inlet section such that the inlet section and the outlet section allow inlet and outlet of the fluid respectively. The pressure reducer chamber further includes a spring-operated piston rod, a sealing component operatively coupled with the piston rod in the pressure reducer chamber for preventing fluid in the outlet section from leaking back to the pressure reducer chamber, and a valve. The valve opens and closes due to rocking motion of the piston rod, and is coupled to the inlet section of the pressure reducer chamber. Further, a sealing element is disposed between the valve and the piston rod, wherein the piston rod is configured to stop a supply of fluid by engagement with the sealing element of the valve. The pressure reducer is characterized in that the valve defines a sealing seat for the sealing element, wherein the sealing element rests upon the sealing seat, and, when the piston rod stops the supply of fluid, the piston rod is sealed radially by the sealing element to prevent the fluid from entering the piston rod.

Thus, the present disclosure provides an improved pressure reducer that is simple in construction and easy to install. By sealing the piston rod radially an improved sealing over a mere axis sealing as known from the state of art is achieved. The pressure reducer with its novel design slowly reduces volume of fluid from the inlet section towards zero.

According to an embodiment of the present disclosure, the at least one of the sealing seat and the sealing element has a non-uniform geometry such that the piston rod is adapted to be sealed in a phased manner. The resulting slow reduction in flow volume prevents pressure shocks, and vibrations in the pressure reducer thereby improving the efficiency and service life of the pressure reducer.

According to an embodiment of the present disclosure, a sealing edge of the piston rod contacting the sealing element is a sharp edge. The sharp edges of the piston rod may reduce noise in an operating state of the pressure reducer.

According to an embodiment of the present disclosure, the sealing edge of the piston rod contacting the sealing element is a blunt edge. The blunt edge of the piston rod may avoid the damaging of the sealing element due to its circular profile when the sealing edge contacts or engages with the sealing element. Further, the blunt edge of the piston rod may avoid or at least reduce turbulences of the fluid flowing through the pressure reducer.

According to an embodiment of the present disclosure, the sealing edge has a non-uniform geometry. The non-uniform geometry of the sealing edge allows for gradual sealing of the piston rod there by preventing vibrations in the pressure reducer while it is operational.

According to an embodiment of the present disclosure, the valve is threadedly engaged to the pressure reducer body. The valve may be easily and conveniently engaged with the pressure reducer body. Further, the threaded engagement allows for easy displacement of the valve along the longitudinal direction of the pressure reducer as per application requirements of the pressure reducer.

According to an embodiment of the present disclosure, the pressure reducer generates a constant output pressure of 4 bars. Further, in some embodiments, the pressure reducer generates a constant output pressure of 1.5 bars. The constant output pressure may be pre-determined and preset during the manufacturing of the pressure reducer according to the application requirements of the pressure reducer. For example, the constant output pressure of 1.5 bars is well suited and optimal for the operation of drip heads and spray nozzles used for gardening operations.

According to an embodiment of the present disclosure, the pressure reducer is used for drip-irrigation. The pressure reducer of the present disclosure finds its application with the gardening operations such as, but not limited to, drip-irrigation. However, the pressure reducer of the present disclosure is not restricted with its application area. The pressure reducer may conveniently and efficiently be used for any domestic or industrial application.

According to an embodiment of the present disclosure, the sealing component is a diaphragm. The diaphragm communicates an excess fluid pressure at the outlet section to the piston rod for downward stroke of the piston rod. Further, the diaphragm allows the sealing of the coupling between the flange and the pressure reducer body. The multiple usage or application of the diaphragm means no separate sealing elements such as O-rings are required for the sealing. Hence, the pressure reducer is easy to assemble with all its necessary components or accessories with further advantage of lower manufacturing expenses due to less components or material required for the assembly or manufacturing of the pressure reducer.

Other features and aspects of this invention will be apparent from the following description and the accompanying drawings.

### BRIEF DESCRIPTION OF THE DRAWINGS

The invention will be described in more detail with reference to the enclosed drawings, wherein:
**FIG. 1** shows a perspective view of a pressure reducer assembly, in accordance with an aspect of the present disclosure;
**FIG. 2** shows a cross-section view of a pressure reducer assembly, in accordance with an aspect of the present disclosure;
**FIG. 3A** shows a cross-section view of a valve assembly, in accordance with an aspect of the present disclosure;
**FIG. 3B** shows a perspective view of a valve and a sealing element, in accordance with an aspect of the present disclosure;
**FIG. 3C** shows a perspective view of a valve assembly, in accordance with an aspect of the present disclosure;
**FIG. 4** shows a cross-section view of a pressure reducer, in accordance with an aspect of the present disclosure;
FIGS. 5A-C show various stages in gradual sealing of a piston rod, in accordance with an aspect of the present disclosure;
FIGS. 6A-E show various non-uniform geometries for a sealing seat, in accordance with an aspect of the present disclosure; and
FIGS. 7A-B show various non-uniform geometries for a sealing element, in accordance with an aspect of the present disclosure.

### DESCRIPTION OF EMBODIMENTS

The present invention will be described more fully hereinafter with reference to the accompanying drawings, in which example embodiments of the invention incorporating one or more aspects of the present invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art. For example, one or more aspects of the present invention may be utilized in other embodiments and even other types of structures and/or methods. In the drawings, like numbers refer to like elements.

Certain terminology is used herein for convenience only and is not to be taken as a limitation on the invention. For example, "upper", "lower", "front", "rear", "side", "longitudinal", "lateral", "transverse", "upwards", "downwards", "forward", "backward", "sideward", "left," "right," "horizontal," "vertical," "upward", "inner", "outer", "inward", "outward", "top", "bottom", "higher", "above", "below", "central", "middle", "intermediate", "between", "end", "adjacent", "proximate", "near", "distal", "remote", "radial", "circumferential", or the like, merely describe the configuration shown in the Figures. Indeed, the components may be oriented in any direction and the terminology, therefore, should be understood as encompassing such variations unless specified otherwise.

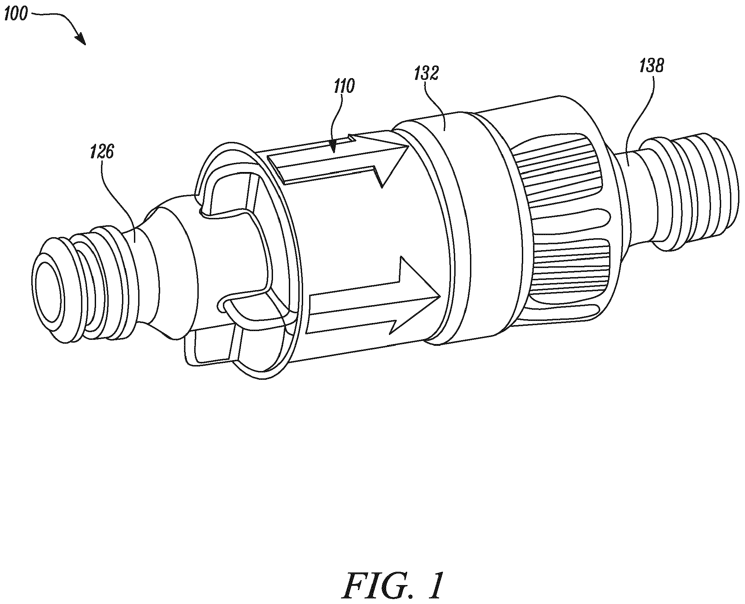

**FIG. 1** illustrates a pressure reducer **100.** The pressure reducer **100** of the present disclosure is used for reducing a fluid pressure of the fluid intended to be used for drip-irrigation or other gardening operations. However, the pressure reducer **100** of the present disclosure is not restricted with its application area. The pressure reducer **100** may conveniently and efficiently be used for any other domestic or industrial applications.

Further, the fluid used with the pressure reducer **100** may be a liquid (say water) or a gas (say air) depending on the application requirement of the pressure reducer **100.** The fluid may selectively be provided by a fluid source (not shown) at a pressure equal to more than the output pressure requirements of the application for which the pressure reducer **100** is used.

The fluid source may advantageously be provided with a valve such as to regulate the outflow of the fluid from the fluid source. Further, the fluid source may be provided with an automatic operatable accessory that may automatically regulate the outflow of the fluid from the fluid source. For example, the fluid source may be provided with a watering computer when the fluid is water. The watering computer may allow and regulate outflow of the water from the fluid source (or water source) depending upon the time of the day, preset water outflow timings, among other factors.

The fluid source may be fluidly coupled to the pressure reducer **100** via a hose or any other means commonly known and understood in the related art without limiting the scope of the present disclosure. In some embodiments, the fluid source may be fluidly coupled to a plurality of pressure reducers **100** by way of fluid distributors (commonly available in the related art).

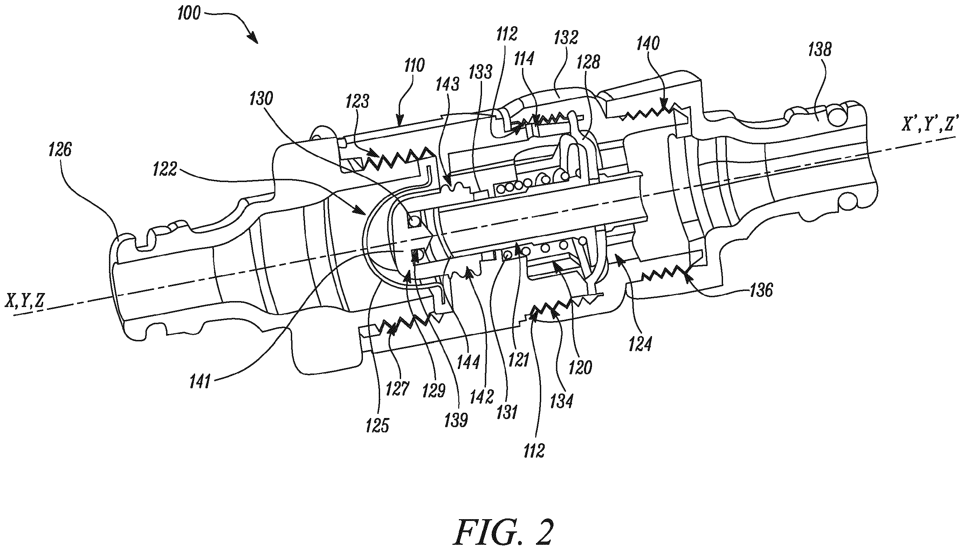

The pressure reducer **100,** as illustrated in **FIGS. 1** and **2****,** includes a pressure reducer body **110.** The pressure reducer body **110** of the present disclosure is a cylindrical body having a central axis **X-X'** along a longitudinal direction of the pressure reducer **100.** However, in actual implementation of the present disclosure, the pressure reducer body **110** may have any other shape without restricting the scope of the present disclosure. The pressure reducer body **110** may be made of brass, plastic, and aluminum. Various grades of stainless steel (such as 303, 304, and 316) may also be used for the manufacture of the pressure reducer body **110.** However, any other material available to handle various fluids and operating environments may be employed for making or manufacturing the pressure reducer body **110.** Further, any suitable manufacturing process may be employed for manufacturing of the pressure reducer body **110** without restricting the scope of the present disclosure.

The pressure reducer body **110** defines at least one pressure reducer chamber **120** along the central axis **X-X'**. The pressure reducer chamber **120** includes an inlet section **122** and an outlet section **124** fluidly coupled with the inlet section **122** such that the inlet section **122** and the outlet section **124** allow inlet and outlet of the fluid respectively. The inlet section **122** is defined along a central axis **Y-Y'** and the outlet section **124** is defined along a central axis **Z-Z'.** In some embodiments, as shown in **FIG. 2****,** the central axes **Y-Y'**, **Z-Z'** and **X-X'** coincide with each other along the longitudinal direction of the pressure reducer **100.** In some embodiments, the central axes **Y-Y'**, **Z-Z'** and **X-X'** may be parallel to each other but may not necessarily coincide with each other. In some embodiments, the central axes **Y-Y'**, **Z-Z'** and the **X-X'** may have any other angular orientation with respect to each other or with respect to the longitudinal direction of the pressure reducer **100** without restricting the scope of the present disclosure in any manner.

The inlet section **122** is fluidly coupled to the fluid source via a coupling nipple **126,** as shown in **FIGS. 1** and **2****.** The coupling nipple **126** may advantageously be designed in a manner such that the coupling nipple **126** selectively allows passage of fluid therethrough (received from the fluid source) only when it is fluidly coupled with the inlet section **122** of the pressure reducer **100.** Such a design of the coupling nipple **126** may substantially prevent fluid leakages when the pressure reducer **100** is not operational or not in use. In some embodiments, the inlet section **122** may be sealingly coupled to the coupling nipple **126.** The sealing may be provided by a sealing gasket, O-ring, or any other known and easily available sealing means (or sealing element).

The inlet section **122** further includes a threaded portion **123** such that the threaded portion **123** threadedly engages with a complimentary threaded portion **127** of the coupling nipple **126.** Thus, in the preferred embodiment of the present disclosure, the inlet section **122,** and the coupling nipple **126** are threadedly engaged or coupled with each other. However, in actual implementation of the present disclosure, the fluid coupling between the inlet section **122** and the coupling nipple **126** may be accomplished by any suitable means known and understood in the related art.

In the preferred embodiment of the present disclosure, as illustrated in **FIG. 2****,** the inlet section **122** further includes a filter element **125.** The filter element **125** may be operatively coupled to the inlet section **122** such that the filter element **125** filters the fluid received from the fluid source before it enters the pressure reducer chamber **120.** The filter element **125** prevents clogging of the inlet section **122** and thereby promotes smooth operations of the pressure reducer **100.** The filter element **125** may be coupled to the inlet section **122** by any means known in the related art. For example, the filter element **125** may be glued to the inlet section.

Further, the filter element **125** may have any shape, size, and type as per the application requirements. In some embodiments, the filter element **125** may be a surface filter made of closely woven fabric or treated paper with a uniform pore size. Fluid from the fluid source flows through the pores of the filter element **125** and contaminants are stopped on the filter element surface. In some embodiments, the filter element **125** may be a depth filter made of layers of fabric or fibers, which provide many tortuous paths for the fluid to flow through. The pores or passages are larger than the rated size of the filter element **125** for particles to be retained in the depth of the media rather than on the surface. In some embodiments, the filter element **125** may be of 5-micron, woven mesh, micronic, porous metal, or magnetic type. The micronic and 5-micron elements have non-cleanable filter media and may be disposed of when they are removed whereas the porous metal, woven mesh and magnetic filter elements are designed to be cleaned and reused.

Further, as illustrated in **FIG. 2****,** the inlet section **122** of the pressure reducer chamber **120** includes a valve **129.** The valve **29** may be made from plastic or any other suitable valve material traditionally used in the related art. The valve **129** selectively allows the fluid from the fluid source to pass through the pressure reducer chamber **120.** The valve **129** selectively allows and disallows passage of fluid via the inlet section **122.** The valve **129** selectively allows the passage of fluid to the outlet section **124** such as to maintain constant output pressure of the pressure reducer **100.**

The valve **129** is located downstream of the filter element **125** in the direction of the fluid flow. In some embodiments, the valve **129** may be located inside the filter element **125.** In some embodiments, the valve **129** may be at least partially located in the filter element. The location of the valve **129** relative to the filter element **125** is such that the filter element prevents contamination of the valve. The filter element **125** prevents valve **129** from exposure to foreign elements (mixed with the fluid received from the fluid source) to improve the longevity and service life of the valve **129.**

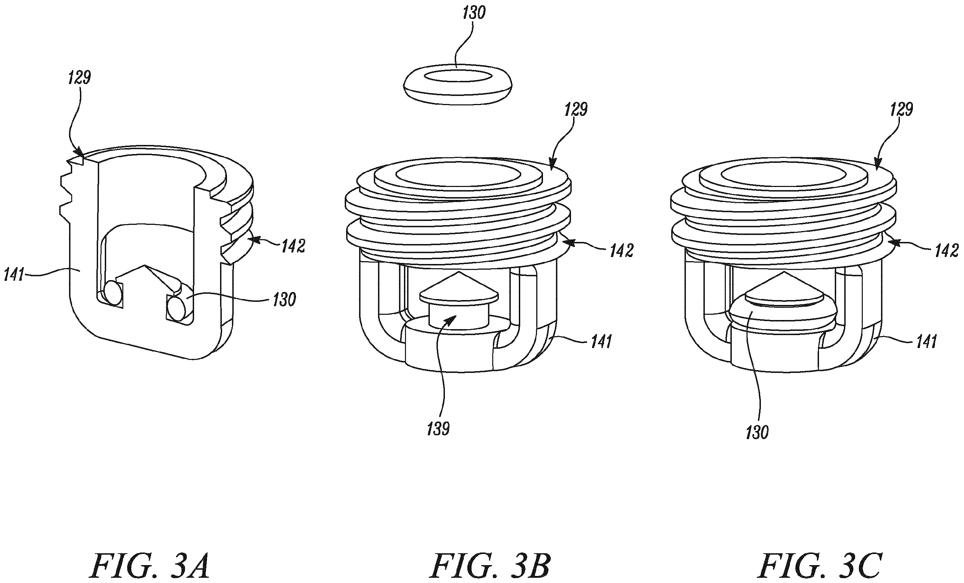

The valve **129** may be coupled to the inlet section **122** of the pressure reducer body **110** or the pressure reducer chamber **120** by any suitable means known in the art. However, in the preferred embodiment, the valve **129** is coupled to the pressure reducer body **110** in a form-fitting form. The valve **129** is screwed or threaded into the inlet section **122** of the pressure reducer chamber **120.** The valve **129** is threadedly engaged to the pressure reducer body **110.** The valve **129** (as shown in FIGS. 3A-C) includes a fourth threaded portion **142** and the inlet **122** of the pressure chamber **120** includes a fifth threaded portion **143** such that the fourth threaded portion **142** and the fifth threaded portion **143** have the same thread pitch. The valve **129** is screwed or threaded into the inlet section **122** by virtue of the fourth threaded portion **142** and the fifth threaded portion **143.**

The screw or threaded coupling between the valve **129** and the inlet section **122** allows for movement of the valve **129** relative to the inlet section along the longitudinal direction of the pressure reducer **100** as per the application requirement of the pressure reducer **100.** The movement of the valve **129** along the longitudinal direction of the pressure reducer **100** may also help in adjusting the constant output pressure generated by the pressure reducer **100.**

In some embodiments, the valve **129** may be along the central axis **X-X'** of the pressure reducer body **110.** In some embodiments, the valve **129** may be along the central axis **Y-Y'** of the inlet section **122.** In some embodiments, the valve **129** may be parallel to the central axis **X-X'** of the pressure reducer body **110.** In some embodiments, the valve **129** may be offset to the central axis **X-X'** of the pressure reducer body **110.** In some embodiments, the valve **129** may be at an angle to the central axis **X-X'** of the pressure reducer body **110.** In some embodiments, the valve **129** may be parallel to the central axis **Y-Y'** of the inlet section **122.** In some embodiments, the valve **129** may be offset to the central axis **Y-Y'** of the inlet section **122.** In some embodiments, the valve **129** may be at an angle to the central axis **Y-Y'** of the inlet section **122.** The valve **129** may have any suitable orientation relative to the longitudinal direction of the pressure reducer **100** without restricting the scope of the present disclosure in any manner.

The valve **129,** as illustrated in **FIGS. 2****,** **3A, 3B** and **3C****,** defines a U-shaped geometry. The U-shaped geometry may be used to conveniently adjust the valve **129** along the longitudinal direction of the pressure reducer **100.** The U-shaped geometry may be used to adjust or move the valve **129** without tools for adjusting the constant output pressure generated by the pressure reducer **100.**

The valve **129** defines a sealing seat **139.** In some embodiments, the sealing seat **139** may be integrally formed with the valve **129.** In some embodiments, the sealing seat **139** may be removably coupled with the valve **129.** In some embodiments, the sealing seat **139** may be in the form of a groove. The sealing seat **139** in actual implementation of the present disclosure, may have any other form and arrangement without limiting the scope of the present disclosure in any manner.

The valve **129** further includes a sealing element **130.** The sealing element **130** rests upon the sealing seat **139** defined by the valve **129.** The sealing element **130** also moves with the movement of the valve **129.** The sealing element **130** may be an O-ring or any other type of seal generally available in the related art. The sealing element **130** mounts on the sealing seat **139** of the valve **129.** The sealing element **130** is further supported by a bracket **141** formed with the sealing seat **139.** The bracket **141** prevents displacement of the sealing element **130** due to factors such as fluid force, among others. The bracket **141** at least partially covers or presses the sealing element **130** along the longitudinal direction of the pressure reducer **100** such that the sealing element **130** maintains its position in the pressure reducer throughout the working of the pressure reducer **100.** In some embodiments, the bracket **141** may be conical in shape. However, in actual implementation, the bracket **141** may have any other shape without limiting the scope of the present disclosure in any manner.

In some embodiments, the sealing element **130** may be a flat seal. However, in the preferred embodiment of the present disclosure, the sealing element **130** is a radial seal, i.e., providing sealing of the fluid in the radial direction.

With continued reference to **FIG. 2****,** the pressure reducer chamber **120** further includes a spring-operated piston rod **121.** The piston rod **121** is a hollow rod allowing passage of the fluid of which the pressure is to be reduced in the pressure reducer **100.** The valve **129** opens and closes due to rocking motion of the piston rod **121** in the pressure reducer chamber **120.** Further, the sealing element **130** as discussed above, is disposed between the valve **129** and the piston rod **121.** A sealing edge **144** of the piston rod **121** contacting the sealing element **130** is sharp edge. The sharp edges of the piston rod **121** may reduce noise in an operating state of the pressure reducer **100.** The sharp edges of the piston rod **121** may reduce noise during rocking motion of the piston rod **121.** The sharp edges of the piston rod **121** may reduce noise at high inlet pressures and low fluid flow conditions. Further, the inside of the hollow piston rod **121** also provides reinforcement to the sealing element **130.**

In some embodiments, the sealing edge **144** of the piston rod **121** contacting the sealing element **130** is a blunt edge. The blunt edge of the piston rod **121** may avoid the damaging of the sealing element **130** due to its circular profile when the sealing edge **144** contacts or engages with the sealing element **130.** Further, the blunt edge of the piston rod **121** may avoid or at least reduce turbulences of the fluid flowing through the pressure reducer **100** which may result in an increase in the flow rate by up to 20%.

The spring **131** may be compression spring or any other known type of spring commonly used to operate the piston rod **121.** In some embodiments, the spring **131** may wrap along the outer peripheral surface of the piston rod**121**. In some embodiments, the spring **131** may be a plurality of springs **131** equidistantly positioned along the outer peripheral surface of the piston rod **121** such that the plurality of springs **131** are oriented along the longitudinal direction of the pressure reducer **100.** The spring **131** may have strength enough to operate the piston rod **121.** The spring **131** may have length enough to generate strength to operate the piston rod **121.** The spring **131** may not have strength more than what is required to operate the piston rod **121** as the greater strength of the spring **131** leads to greater installation space of the spring **131** and thus an unnecessary increase in size of the pressure reducer **100.**

Further, the piston rod **121** may be concentric with the pressure reducer body **110** or the pressure reducer chamber **120.** In some embodiments, the piston rod **121** may have any other suitable orientation relative to the earlier defined central axes **X-X'**, **Y-Y'** and **Z-Z'** in accordance with the operational feasibility of the pressure reducer **100.** The piston rod **121** of the present disclosure is configured to oscillate back and forth or exhibit the rocking motion substantially within the pressure reducer chamber **120.** The back-and-forth motion of the piston rod **121** is due to differential force experienced by the piston rod **121.** The piston rod **121** is forced to exhibit a downward stroke i.e., towards the inlet section **122** when the pressure at the outlet section **124** is more than required for the application for which the pressure reducer **100** is intended for use. Further, the piston rod **121** exhibits an upward stroke i.e., towards the outlet section **124** when the pressure at the outlet section **124** is equal to pressure required for the application for which the pressure reducer **100** is intended for use.

The fluid in the outlet section **124** is prevented from leaking back to the pressure reducer chamber **120** by a sealing component **128** operatively coupled with the piston rod **121** in the pressure reducer chamber **120.** The sealing component **128** may be a lip seal, an O-ring, or any other known type of the sealing component **128** known and understood in the related art. However, in the preferred embodiment of the present disclosure, the sealing component **128** is a diaphragm **128.** The diaphragm **128** communicates an excess fluid pressure at the outlet section **124** to the piston rod **121** for downward stroke of the piston rod **121.** Further, for rest of the disclosure, the sealing component **128** will be treated as the diaphragm **128.**

Referring to the differential force experienced by the piston rod **121,** the force experienced by the piston rod **121** is due to the spring **131** and a diaphragm **128** operatively coupled with the piston rod **121** in the pressure reducer chamber **120.** The direction of motion of the piston rod **121** at any particular time instant is governed by the direction of net force generated upon the piston rod **121** by the spring **131** and the diaphragm **128.** For example, the piston rod **121** moves in upstream direction when the net force is in upstream direction due to higher magnitude of force generated by the diaphragm **128** relative to the force generated by the spring **131.**

The constant output pressure generated by the pressure reducer **100** may be adjusted by varying the initial distance or the gap between the piston rod **121** and the sealing element **130** during the manufacturing of the pressure reducer **100.** The gap may be varied without the help of the tool. For example, the constant output pressure may be pre-determined and preset during the manufacturing of the pressure reducer according to the application requirements of the pressure reducer **100.** Some applications may demand the constant output pressure of 4 bars while other applications such as drip heads and spray nozzles used for gardening operations may demand the constant output pressure of 1.5 bars. Accordingly, the initial distance or the gap between the piston rod **121** and the sealing element **130** is increased for generating constant output pressure of 4 bars while it is comparatively reduced for generating constant output pressure of 1.5 bars.

With continued reference to **FIG. 2****,** the pressure reducer body **110** includes a first threaded portion **112** on its outside surface facing opposite to the pressure reducer chamber **120.** The first threaded portion **112** may be used for coupling the pressure reducer body **110** with other accessories of the pressure reducer **100.** The pressure reducer body **110** further includes a pressure compensation hole **114** in the first threaded portion **112.** The pressure compensation hole **114** ensures unrestricted mobility of the piston rod **121.** The pressure compensation hole **114** allows release of air pressure generated in the pressure reducer chamber **120** when the piston rod **121** moves in the upstream direction of the fluid flow in the pressure reducer **100.** The pressure compensation hole **114** allows air to escape from the pressure reducer chamber **120** when the piston rod **121** moves in the upstream direction of the fluid flow in the pressure reducer **100.** Conversely, the pressure compensation hole **114** allows suction of the surrounding air (external to the pressure reducer **100**) when the piston rod **121** moves in the downstream direction of the fluid flow in the pressure reducer **100.**

In some embodiments, the pressure compensation hole **114** is a circular hole. The hole is preferably circular as it is easy to drill a circular hole. Further, it substantially prevents material wastage when compared with manufacturing or producing holes of other shapes. However, the hole may have any other suitable shape without restricting the scope of the present disclosure.

In some embodiments, air in the pressure reducer chamber **120** surrounding the spring-operated piston rod **121** is sealed from the valve **129** using a sealing element **133.** The sealing element **133** prevents mixing of air in the pressure reducer chamber **120** with the fluid introduce in the pressure reducer **100** via the inlet section **122.** The sealing element **133** may be O-ring or any other commonly available sealing element known in the art without restricting the scope of the present disclosure.

With reference to **FIGS. 1** and **2****,** a flange **132** is sealingly coupled with the pressure reducer body **110** such that the sealing disallows the backflow of fluid past the outlet section **124.** The flange **132** is concentric with the pressure reducer body **110.** The diaphragm **128** (alternatively, the sealing component **128**) seals the coupling between the flange **132** and the pressure reducer body **110.** The boundaries or the extremities of the diaphragm **128** are abutted or pressed between the flange **132** and the pressure reducer body **110,** thereby providing a fluid-tight sealing. The fluid tight sealing is the outcome of the contact pressure exerted on the diaphragm **128** due to the coupling between the flange **132** and the pressure reducer body **110.**

The sealing prevents or disallows the backflow of fluid past the outlet section **124,** thereby eliminating any possible leakage and improving the overall efficiency of the pressure reducer **100.** Further, the multiple usage or application of the diaphragm **128** means no separate sealing elements such as O-rings are required for the sealing. Hence, the pressure reducer **100** is easy to assemble with all its necessary components or accessories with further advantage of lower manufacturing expenses due to less components or material required for the assembly or manufacturing of the pressure reducer **100.** Further, due to less components, pressure reducer maintenance cost is also reduced. Furthermore, the sealing may prevent ingress of air in the outlet section **124,** thereby preventing mixing of air drawn-in from the compensation hole with the fluid (say liquid).

The flange **132** has a second threaded portion **134** complimentary to the first threaded portion **112** such that the pressure reducer body **110** and the flange **132** are threadedly coupled to each other through the first and the second threaded portion **112, 134.** The flange **132** further includes a third threaded portion **136.** The third threaded portion **136** is formed on an outer surface of the flange **132** contrary to the second threaded portion **134,** which is formed on an inner surface of the flange **132.** The third threaded portion **136** faces the pressure reducer body **110** while the second threaded portion **134,** faces away from the pressure reducer body **110** in an opposite direction.

The second threaded portion **134** couples the flange **132** with the pressure reducer body **110** whereas the third threaded portion **136** couples the flange **132** with a connector **138** (or a nipple **138**). The connector **138** may complete the pressure reducer assembly and may allow the fluid with the reduced pressure to be transported for various domestic and industrial applications. The coupling between the flange **132** and the connector **138** is a threaded coupling due to threaded engagement of the third threaded portion **136** and a threaded portion **140** of the connector **138.** However, in some embodiments, the coupling between the flange **132** and the connector **138** may be due to any other coupling means known and understood in the related art.

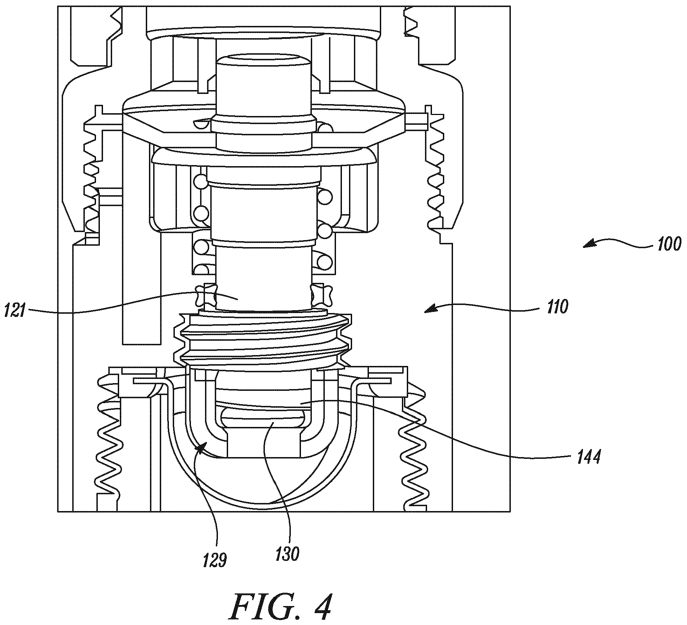

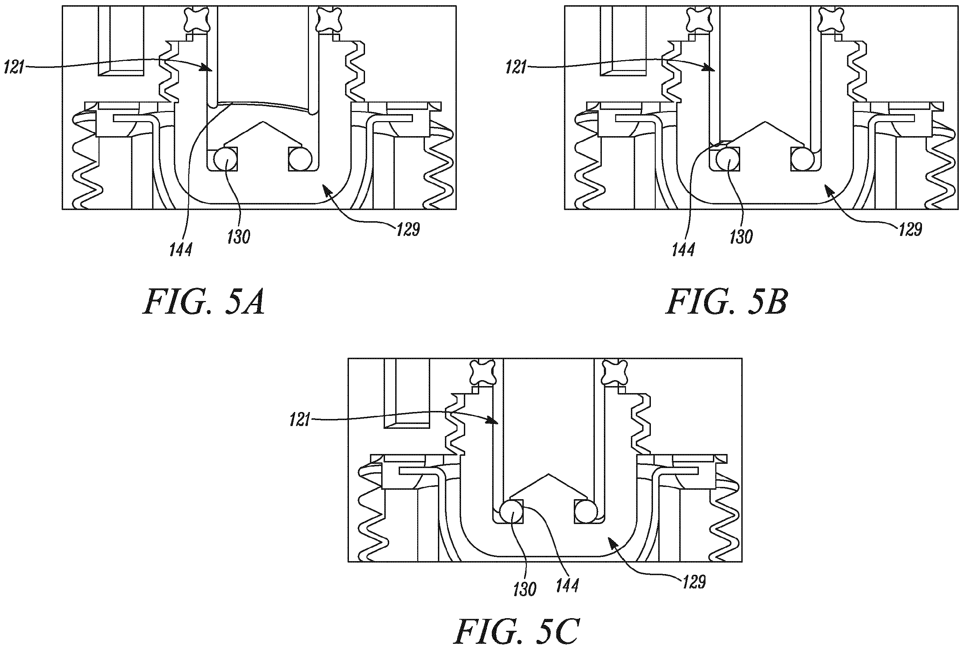

In some embodiments of the pressure reducer **100** of the present disclosure, as illustrated in **FIG. 4****,** the sealing edge **144** of the piston rod **121** internally contacting the sealing element **130** has a non-uniform geometry. The non-uniform geometry of the sealing edge **144** of the piston rod **121** allows for gradual sealing of the piston rod **121** thereby preventing vibrations in the pressure reducer **100** while it is operational. The non-uniform geometry of the sealing edge **144** may correspond to an angular geometry or any other known geometry without limiting the scope of the present disclosure in any manner. The gradual or phased sealing of the piston rod **121** is illustrated in **FIGS. 5A, 5B** and **5C****.** A portion of the sealing edge **144** of the piston rod **121** at least partially surrounds or engages with the sealing element **130** before the remaining portion of the sealing edge **144.** A portion of the sealing element **130** engages with the sealing edge **144** before the remaining portion of the sealing element **130.**

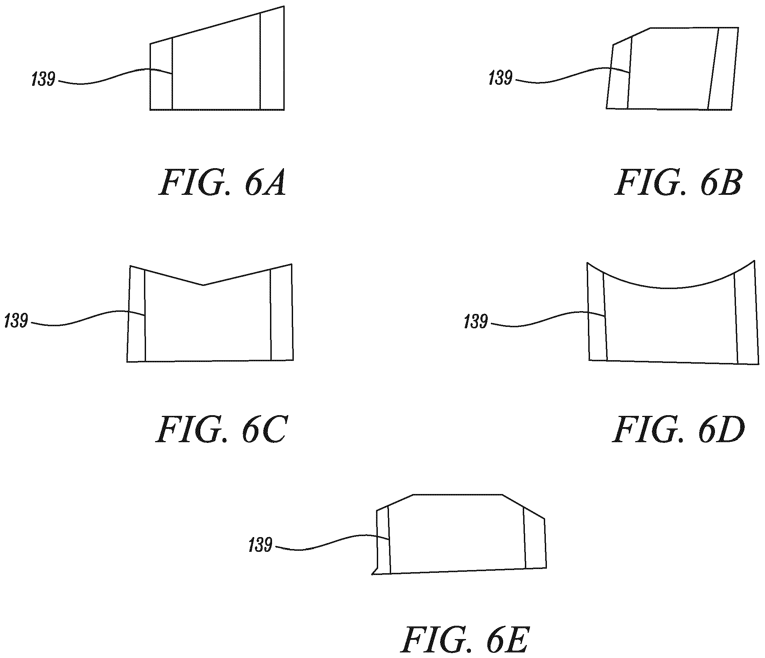

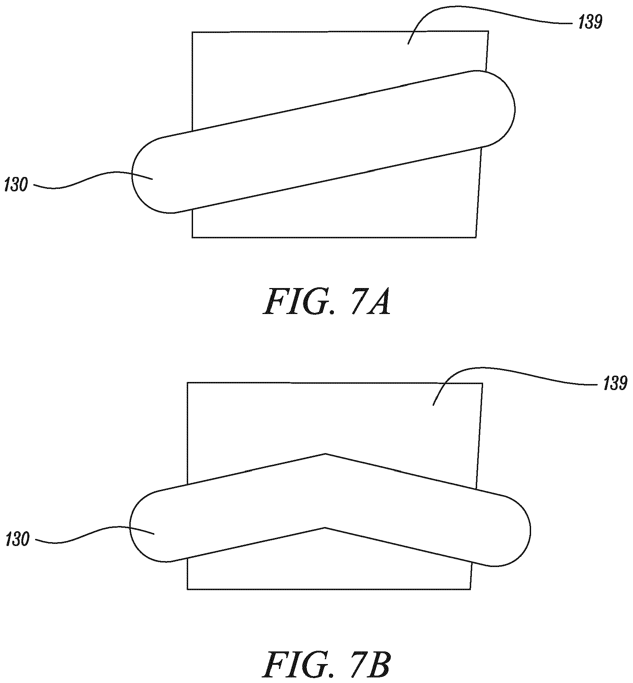

Further, in some embodiments, as illustrated in FIGS. 6A-E and 7A-B, at least one of the sealing seat **139** and the sealing element **130** has an non-uniform geometry such that the piston rod **121** is adapted to be radially sealed in a phased manner. The sealing between the sealing element **130** and the piston rod **121** takes place gradually. The sealing seat **139** may be formed as slanted body, semi-diagonal body, v shape recessed body, u shape recessed body, or roof-recess body as illustrated in FIGS. 6A-E respectively. Any shape of the sealing seat **139** may be selected amongst the described shapes, or any other non-uniform geometrical shapes to prevent shocks, vibrations during operation of the pressure reducer **100** among other benefits. Alternatively, the sealing element **130** may be formed as slanted or v shape body, or any other type of non-uniform or body as illustrated in FIGS. 7A-B respectively.

The piston rod **121** with the non-uniform geometry in conjunction with the at least one of the sealing seat **139** and the sealing element **130** with the non-uniform geometry improve the overall efficiency of the pressure reducer **100** by allowing gradual radial sealing between the piston rod **121** and the sealing element **130** such that the gradual radial sealing prevents or eliminates the shocks and the vibrations when the piston rod **121** momentarily stops the flow of the fluid from the inlet section **122** towards the outlet section **124.** The non-uniform geometries of the piston rod **121,** the sealing seat **139** or the sealing element **130** slowly reduces the volume flow towards zero such that there is no production or occurrence of the shock or vibration in the pressure reducer **100.**

In operation, the fluid from the fluid source enters the pressure reducer **100** at high pressure from the inlet section **122.** The fluid is filtered using filter element **125** before it reaches the valve **129.** The valve **129** selectively allows the passage of the fluid towards the spring-operated hollow piston rod **121.** The fluid from the piston rod **121** flows outwards towards the flange **132** and finally towards the connector **138** for use with various domestic and industrial applications.

The pressure of the high-pressure fluid from the fluid source is reduced by the oscillating or rocking motion of the piston rod **121** substantially within the pressure reducer chamber **120.** The piston rod **121** oscillates to reduce the fluid pressure to the constant output pressure. The piston rod **121** momentarily stops or obstructs the supply of fluid from the inlet section **122** towards the outlet section **124.** The piston rod **121** stops the supply of fluid by engagement with the sealing element **130** of the valve **129.** The sealing element **130** radially seals the piston rod **121** to prevent the fluid from entering the piston rod **121.**

The piston rod **121** momentarily stops the supply of fluid from the inlet section **122** when it is pressed by the diaphragm **128** against the spring force towards the upstream direction of the fluid flow. Further, the fluid may also lose some energy when the fluid presses the diaphragm **128** such that diaphragm further presses the piston rod **121** to make it move towards the upstream direction of the fluid flow. This way, the high fluid pressure is reduced to the final output pressure.

Further, when the fluid pressure near the output section **124** is reduced to the final value, the spring **131** may overcome the force of the diaphragm **128** such that the piston rod **121** moves in the downstream direction towards its original position. The oscillating movement of the piston rod **121** is assisted by the pressure compensation hole **114** as already discussed above.

Thus, the present disclosure provides an improved pressure reducer **100** that is simple in construction and easy to install. The pressure reducer **100** with its novel design slowly reduces volume of fluid from the inlet section **122** towards zero. The slow reduction in flow volume prevents pressure shocks, and vibrations in the pressure reducer **100** thereby improving the efficiency and service life of the pressure reducer **100.**

### LIST OF ELEMENTS

- **100**: Pressure Reducer
- **110**: Pressure Reducer Body
- **112**: First Threaded Portion
- **114**: Pressure Compensation Hole
- **120**: Pressure Reducer Chamber
- **121**: Piston Rod
- **122**: Inlet Section
- **123**: Threaded Portion
- **124**: Outlet Section
- **125**: Filter Element
- **126**: Coupling Nipple
- **127**: Threaded Portion
- **128**: Sealing Component
- **129**: Valve
- **130**: Sealing Element
- **131**: Spring
- **132**: Flange
- **133**: Sealing Element
- **134**: Second Threaded Portion
- **136**: Third Threaded Portion
- **138**: Connector/Nipple
- **139**: Sealing Seat
- **140**: Threaded Portion
- **141**: Bracket
- **142**: Four Threaded Portion
- **143**: Fifth Threaded Portion
- **144**: Sealing Edge
- **X-X'**: Central Axis
- **Y-Y'**: Central Axis
- **Z-Z'**: Central Axis

## Claims

1. A pressure reducer (**100**) for reducing a fluid pressure comprising:
a pressure reducer body (**110**) defining at least one pressure reducer chamber (**120**) along a central axis (**X-X'**), the pressure reducer chamber (**120**) including:
an inlet section (**122**) and an outlet section (**124**) fluidly coupled with the inlet section (**122**) such that the inlet section (**122**) and the outlet section (**124**) allow inlet and outlet of the fluid respectively;
a spring-operated piston rod (**121**);
a sealing component (**128**) operatively coupled with the piston rod (**121**) in the pressure reducer chamber (**120**) for preventing fluid in the outlet section (**124**) from leaking back to the pressure reducer chamber (**120**);
a valve (**129**), wherein the valve (**129**) opens and closes due to rocking motion of the piston rod (**121**), and wherein the valve (**129**) is coupled to the inlet section (**122**) of the pressure reducer chamber (**120**); and
a sealing element (**130**) disposed between the valve (**129**) and the piston rod (**121**), wherein the piston rod (**121**) is configured to stop a supply of fluid by engagement with the sealing element (**130**) of the valve (**129**);
**characterized in that:**
the valve (**129**) defines a sealing seat (**139**) for the sealing element (**130**), wherein the sealing element (**130**) rests upon the sealing seat (**139**); and,
when the piston rod (**121**) stops the supply of fluid, the piston rod (**121**) is sealed radially by the sealing element (**130**) to prevent the fluid from entering the piston rod (**121**).

2. The pressure reducer (**100**) of claim 1,
wherein the at least one of the sealing seat (**139**) and the sealing element (**130**) has a non-uniform geometry such that the piston rod (**121**) is adapted to be sealed in a phased manner.

3. The pressure reducer (**100**) of claim 1,
wherein a sealing edge (**144**) of the piston rod (**121**) contacting the sealing element (**130**) is sharp edge.

4. The pressure reducer (**100**) of claim 1,
wherein the sealing edge (**144**) of the piston rod (**121**) contacting the sealing element (**130**) is blunt edge.

5. The pressure reducer (**100**) of any one of the preceding claims 3 or 4, wherein the sealing edge (**144**) has a non-uniform geometry.

6. The pressure reducer (**100**) of any one of the preceding claims,
wherein the valve (**129**) is threadedly engaged to the pressure reducer body (**110**).

7. The pressure reducer (**100**) of any one of the preceding claims,
wherein the pressure reducer (**100**) is adapted to generate a constant output pressure of 4 bars.

8. The pressure reducer (**100**) of any one of the preceding claims,
wherein the pressure reducer (**100**) is adapted to generate a constant output pressure of 1.5 bars.

9. The pressure reducer (**100**) of any one of the preceding claims,
wherein the pressure reducer (**100**) is adapted to be used for drip-irrigation.

10. The pressure reducer (**100**) of any one of the preceding claims,
wherein the sealing component (**128**) is a diaphragm (**128**).

## Patentansprüche

1. Druckminderer **(100)** zum Mindern eines Fluiddrucks, umfassend:
einen Druckmindererkörper (**110**), der mindestens eine Druckmindererkammer (**120**) entlang einer Mittelachse (**X-X'**) definiert, wobei die Druckmindererkammer (**120**) einschließt:
einen Einlassabschnitt **(122)** und einen Auslassabschnitt **(124),** der mit dem Einlassabschnitt **(122)** derart fluidisch gekoppelt ist, dass der Einlassabschnitt **(122)** und der Auslassabschnitt **(124)** einen Einlass beziehungsweise einen Auslass des Fluids ermöglichen;
eine federbetriebene Kolbenstange **(121);**
eine Dichtungskomponente **(128),** die mit der Kolbenstange **(121)** in der Druckmindererkammer **(120)** wirkgekoppelt ist, zum Verhindern, dass Fluid in dem Auslassabschnitt **(124)** zurück in die Druckmindererkammer **(120)** ausläuft;
ein Ventil **(129)** , wobei sich das Ventil **(129)** aufgrund der Schwenkbewegung der Kolbenstange **(121)** öffnet und schließt, und wobei das Ventil **(129)** mit dem Einlassabschnitt **(122)** der Druckmindererkammer **(120)** gekoppelt ist; und
ein Dichtungselement **(130),** das zwischen dem Ventil **(129)** und der Kolbenstange **(121)** angeordnet ist, wobei die Kolbenstange **(121)** konfiguriert ist, um eine Fluidzufuhr durch Eingriff mit dem Dichtungselement **(130)** des Ventils **(129)** zu stoppen;
**dadurch gekennzeichnet, dass:**
das Ventil **(129)** einen Dichtungssitz **(139)** für das Dichtungselement **(130)** definiert, wobei das Dichtungselement **(130)** auf dem Dichtungssitz **(139)** ruht; und,
wenn die Kolbenstange **(121)** die Fluidzufuhr stoppt, die Kolbenstange **(121)** durch das Dichtungselement **(130)** radial abgedichtet wird, um ein Eindringen des Fluids in die Kolbenstange **(121)** zu verhindern.

2. Druckminderer (**100**) nach Anspruch 1,
wobei das mindestens eines des Dichtungssitzes **(139)** und des Dichtungselements **(130)** eine ungleichmäßige Geometrie aufweisen, derart, dass die Kolbenstange **(121)** angepasst ist, um auf stufenweise Art abgedichtet zu werden.

3. Druckminderer (**100**) nach Anspruch 1,
wobei eine Dichtungskante **(144)** der Kolbenstange **(121),** die das Dichtungselement **(130)** berührt, scharfkantig ist.

4. Druckminderer (**100**) nach Anspruch 1,
wobei die Dichtungskante **(144)** der Kolbenstange **(121),** die das Dichtungselement **(130)** berührt, stumpfkantig ist.

5. Druckminderer **(100)** nach einem der vorstehenden Ansprüche 3 oder 4,
wobei die Dichtungskante **(144)** eine ungleichmäßige Geometrie aufweist.

6. Druckminderer (**100**) nach einem der vorstehenden Ansprüche,
wobei das Ventil **(129)** durch ein Gewinde mit dem Druckmindererkörper **(110)** in Eingriff ist.

7. Druckminderer (**100**) nach einem der vorstehenden Ansprüche,
wobei der Druckminderer **(100)** angepasst ist, um einen konstanten Ausgangsdruck von 4 bar zu erzeugen.

8. Druckminderer (**100**) nach einem der vorstehenden Ansprüche,
wobei der Druckminderer **(100)** angepasst ist, um einen konstanten Ausgangsdruck von 1,5 bar zu erzeugen.

9. Druckminderer (**100**) nach einem der vorstehenden Ansprüche,
wobei der Druckminderer **(100)** angepasst ist, um für Tropfbewässerung verwendet zu werden.

10. Druckminderer (**100**) nach einem der vorstehenden Ansprüche,
wobei die Dichtungskomponente **(128)** eine Membran **(128)** ist.

## Revendications

1. Réducteur de pression **(100)** permettant de réduire une pression de fluide comprenant :
un corps de réducteur de pression **(110)** définissant au moins une chambre de réducteur de pression **(120)** le long d'un axe central **(X-X'),** la chambre de réducteur de pression **(120)** comportant :
une section d'entrée **(122)** et une section de sortie **(124)** en communication fluidique avec la section d'entrée **(122)** de telle sorte que la section d'entrée **(122)** et la section de sortie **(124)** permettent une entrée et une sortie du fluide respectivement ;
une tige de piston actionnée par ressort **(121)** ;
un composant d'étanchéité **(128)** accouplé de manière opérationnelle à la tige de piston **(121)** dans la chambre de réduction de pression **(120)** pour empêcher le fluide dans la section de sortie **(124)** de fuir vers la chambre de réduction de pression **(120)** ;
une soupape **(129),** dans lequel la soupape **(129)** s'ouvre et se ferme sous l'effet d'un mouvement de bascule de la tige de piston **(121),** et dans lequel la soupape **(129)** est accouplée à la section d'entrée **(122)** de la chambre de réduction de pression **(120)** ; et
un élément d'étanchéité **(130)** disposé entre la soupape **(129)** et la tige de piston **(121),** dans lequel la tige de piston **(121)** est conçue pour interrompre une alimentation en fluide par mise en prise avec l'élément d'étanchéité **(130)** de la soupape **(129)** ;
**caractérisé en ce que** :
la soupape **(129)** définit un siège d'étanchéité **(139)** pour l'élément d'étanchéité **(130),** dans lequel l'élément d'étanchéité **(130)** repose sur le siège d'étanchéité **(139)** ; et,
lorsque la tige de piston **(121)** interrompt l'alimentation en fluide, la tige de piston **(121)** est scellée radialement par l'élément d'étanchéité **(130)** afin d'empêcher le fluide de pénétrer dans la tige de piston **(121).**

2. Réducteur de pression **(100)** selon la revendication 1,
dans lequel l'au moins un parmi le siège d'étanchéité **(139)** et l'élément d'étanchéité **(130)** a une géométrie non uniforme de sorte que la tige de piston **(121)** est adaptée pour être scellée de manière progressive.

3. Réducteur de pression **(100)** selon la revendication 1,
dans lequel un bord d'étanchéité **(144)** de la tige de piston **(121)** en contact avec l'élément d'étanchéité **(130)** est un bord tranchant.

4. Réducteur de pression **(100)** selon la revendication 1,
dans lequel le bord d'étanchéité **(144)** de la tige de piston **(121)** en contact avec l'élément d'étanchéité **(130)** est un bord émoussé.

5. Réducteur de pression **(100)** selon l'une quelconque des revendications précédentes 3 ou 4,
dans lequel le bord d'étanchéité **(144)** a une géométrie non uniforme.

6. Réducteur de pression **(100)** selon l'une quelconque des revendications précédentes,
dans lequel la soupape **(129)** est filetée et mise en prise avec le corps du réducteur de pression **(110).**

7. Réducteur de pression **(100)** selon l'une quelconque des revendications précédentes,
dans lequel le réducteur de pression **(100)** est adapté pour générer une pression de sortie constante de 4 bars.

8. Réducteur de pression **(100)** selon l'une quelconque des revendications précédentes,
dans lequel le réducteur de pression **(100)** est adapté pour générer une pression de sortie constante de 1,5 bars.

9. Réducteur de pression **(100)** selon l'une quelconque des revendications précédentes,
dans lequel le réducteur de pression **(100)** est adapté pour être utilisé dans l'irrigation au goutte-à-goutte.

10. Réducteur de pression **(100)** selon l'une quelconque des revendications précédentes,
dans lequel le composant d'étanchéité **(128)** est un diaphragme **(128).**
